Europäisches Patentamt

European Patent Office

Office européen des brevets

(11) Publication number: **0 107 447**
**B1**

# EUROPEAN PATENT SPECIFICATION

(45) Date of publication of patent specification: **26.04.89**

(51) Int. Cl.⁴: **G 06 F 9/38**

(21) Application number: **83306191.4**

(22) Date of filing: **13.10.83**

(54) Computer data distributor.

(30) Priority: **13.10.82 US 434126**

(43) Date of publication of application:
**02.05.84 Bulletin 84/18**

(45) Publication of the grant of the patent:
**26.04.89 Bulletin 89/17**

(84) Designated Contracting States:
**DE FR GB IT SE**

(56) References cited:

ELEKTRONISCHE RECHENANLAGEN,
vol.15,no. 3, June 1973, pages 125-132,
München, DE; J. SWOBODA:
"Parallelarbeitende Rechenwerke für einen
Strom von Einadressbefehlen"

FALL JOINT COMPUTER CONFERENCE-AFIPS
CONFERENCE PROCEEDINGS, 1969, pages
201-208, Montvale, US; P.M. MELLIAR-SMITH:
"A design for a fast computer for scientific
calculations"

DATAMATION, vol. 24, no. 2, February 1978,
pages 159-172, Chicago, US; C. JENSEN:
"Taking another approach to supercomputing"

(73) Proprietor: **Honeywell Information Systems Inc.**
**200 Smith Street**
**Waltham County of Middlesex, Massachusetts**
**02154 (US)**

(72) Inventor: **Wilhite, John E.**
**8225 North 45th Avenue**
**Glendale, AZ 85302 (US)**
Inventor: **Shelly, William A.**
**4900 East Osborn Road**
**Phoenix, AZ 85018 (US)**

(74) Representative: **Falcetti, Carlo et al**
**Honeywell Information Systems Italia Pregnana**
**Plant Via AiLaborat Olivetti**
**I-20010 Pregnana Milanese (Milan) (IT)**

## Description

This invention relates to synchronous central processors of large-scale, high-performance, general-purpose digital data processing systems, and more particularly to a distributor, for the central execution pipeline unit of a central processor, which serves as a communications center by which machine words are transmitted between units of the central processor and which has the capability of aligning machine words as required.

To increase the performance of the central processors (CPU's) of data processing systems of which they are a part, many modifications and improvements have been incorporated into such CPU's. One such modification is the use of a highspeed cache unit located in the CPU to minimize the time required to fetch operands and instructions. To further increase the performance of CPU's, they are synchronized; i.e., a clock produces clock pulses which control each step, or stage, of the operation of the CPU. Synchronization permits paralleling, overlapping, or pipelining the execution of instructions by dividing the process of executing each instruction into a number of sequential steps, with each instruction going through the same sequence of steps one after another.

In a CPU having several execution units, with each execution unit being capable of executing a sub-set of the instruction repertoire of the CPU and which execution units operate substantially independently of each other, it is desirable that the central execution pipeline unit of the CPU initiate the execution of instructions, including the fetching of the operand, or target word, or operands, of each instruction, in a series of steps or stages, each requiring one clock period to complete, and through which each instruction progresses so that, at the completion of the last stage of the central execution pipeline, an instruction and its operands, or target words, are available and ready for execution by the appropriate execution unit.

In order to make the target words of an instruction available and ready for execution by one of the plurality of execution units as each instruction completes its passage through the central execution pipeline unit, there is a requirement that the target words, from whatever the source (and there are more than one), be transmitted to the execution units as expeditiously as possible. Since certain operations, or instructions, require the data in the target word or words to be aligned, alignment of the target word should be accomplished prior to its receipt by the execution unit to which it is addressed. Such a CPU also needs a means for transmitting information between units of the CPU, in addition to the execution units and within the central pipeline execution unit itself, as expeditiously as possible to maximize the performance of the CPU. Pipelined or parallel processors, which pipeline the execution of instructions by dividing the process of executing each instruction into a number of sequential steps, with each instruction going through the same sequence of steps one after the other, and which direct, or distribute operands to an appropriate one of a plurality of execution unit for parallel, overlapped execution of operations over appropriate, operands are well known.

For instance the Article "Parallel execution units for a stream of one address instructions", by J. SWOBODA published at pages 125 to 132 of "Electronische Rechen amlagen" Vol 15 No 3, June 1973, in suggesting that one-address instructions can be processed with similar performances as multi-address instructions, shows in schematics the structure of a computer having a plurality of execution units, working in parallel and receiving operands from a plurality of sources, memory or registers, through a communication network, which may be broadly construed as a distributor.

Likewise, the Article "Taking another approach to supercomputing". by Carl Jensen, published at pages 159 to 172 of "Datamation" Vol 24, No 2 February 1978 in commenting a Burroughs Scientific Processor provides information on Vector Processors, where a plurality of identical execution units is fed with an information set received from a parallel memory, or a plurality of memories read out in parallel through an alignment network which is in fact a distributor and a data aligning circuit.

The design of distributor and aligning circuits is a key point in obtaining without remarkable complications the desired performances from a pipelined processor having a plurality of execution units.

The object of the invention is to provide a distributor which performs the appropriate distribution as expeditiously as possible, and alignment when required without delaying distribution when alignment is not required, so as to maximize the performance of the CPU.

Accordingly the present invention provides a distributor for a central processor having a plurality of units, the distributor having a switch unit for selecting a machine word from one of a plurality of sources, a register for storing the selected machine word, selection means for transmitting the selected machine word from said register to designated ones of said plurality of units, an alignment circuit connected to the output of said register, for receiving said selected machine word and for changing the order of portions of said machine word thereby outputting an aligned word, as a source for said switch unit.

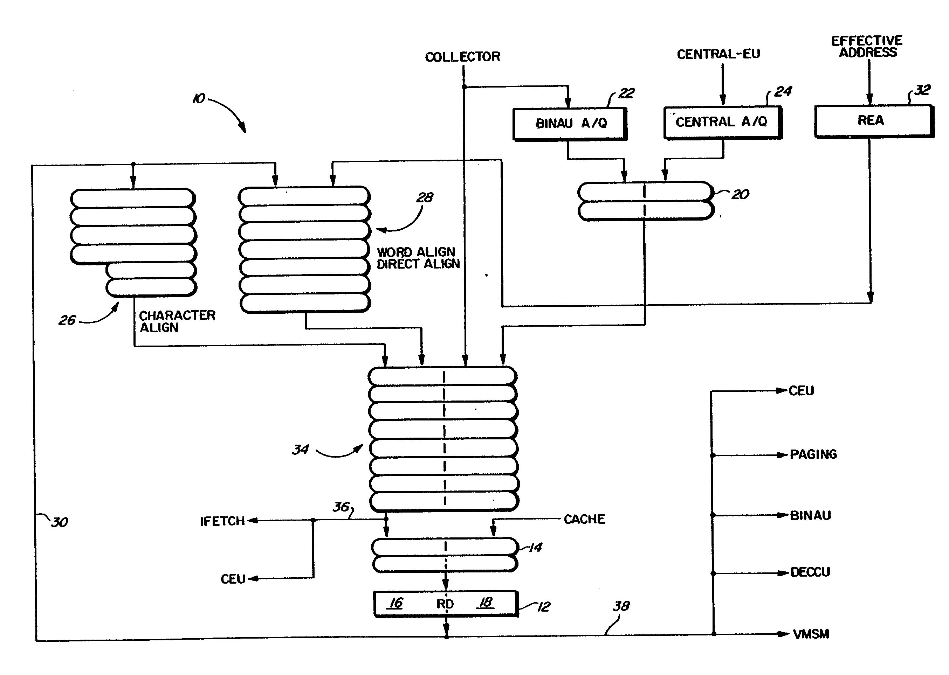

The advantage of the invention and the related features will appear more clearly from the following description of a distributor embodying the invention and with reference to the drawing which is a block diagram of such embodiment.

## INTRODUCTORY SUMMARY

The distributor is for the central execution pipeline unit of a synchronous CPU having an instruction fetch unit, a collector unit, a cache unit, and a plurality of execution units, One of the execution units, the central execution unit, performs so-called basic operations, many of which can be performed in a single clock period and the results of which are frequently needed by other units in order that such units can perform their intended functions.

The distributor includes a pair of A/Q registers in which are stored copies of the contents of the A/Q registers of the central and the binary arithmetic execution units, the only two execution units performing operations which change the contents thereof. The distributor also includes an effective address register in which the effective address of a target word, or words, of an instruction is stored. The signals stored in the A/Q registers are applied to a one-of-two select A/Q switch which produces as its output the contents of one of the two A/Q registers, the one selected being determined by which position of the A/Q switch is enabled by a control signal. The distributor also includes a data register for storing two machine words in two machine word positions, one the odd and the other the even position. Each machine word has 36 bits and is divisible into either 6-bit or 9-bit characters.

The alignment function of the distributor is performed by a character alignment switch and a word alignment switch, to which the machine words stored in the data register are applied. The character alignment switch, depending upon which position of the switch is enabled, right justifies in its output word one of the 4 9-bit characters, or one of the 6-bit characters of the even-numbered word in the data register. The word alignment switch produces as its output a machine word which, depending upon which position is enabled, is either the odd or the even word stored in the data register, or is a machine word in which the effective address, which consists of 18 bits, is placed in either the upper or lower half of its output word, depending upon which of its positions is enabled.

The outputs of the character and word alignment switches, of the collector unit, and of the A/Q switch, the source, are applied to a data-in switch which selects as its output, depending upon which position is enabled, a pair of machine words derived from one of the sources. If the selected source provides a single word, the second, or odd, word of the output of the data-in switch is all 0's. The output of the data-in switch is transmitted to the central execution unit and the instruction fetch unit. The output of the data-in switch is also an input to a data register switch. A second input of the data register switch is a pair of machine words from the cache unit. The data register switch is a pair of one-of-four select switches, each pair of which is one machine word wide, and which, depending upon which positions are enabled, can apply any one of the four machine words applied to it for storage in any one or both word positions of the data register. The machine words stored in the data register are transmitted to the character and word alignment switches, as well as to the execution units of the CPU and to the paging logic of the central execution pipeline unit.

DETAILED DESCRIPTION

Referring to the figure, the primary register of distributor 10 is data register (RD) 12 which functions as the data input register for the execution units of a central processor. The central processor includes as one of its units a central execution pipeline unit (CEPU), of which distributor 10 is a component. The execution units of the CPU are the central execution unit (CEU), the binary arithmetic unit (BINAU), the decimal and character unit (DECCU), and the virtual memory, security and Multics unit (VMSM).

The primary input to data register 12 comes from the cache unit of the CPU and consists of two machine words which are applied to data register switch 14. A machine word is 36 bits long and is divisible into four 9-bit characters or six 6-bit characters. A half word is 18 bits. Data register switch 14 is two side-by-side one-of-four select switches, each set of which is one word wide. Data register 12 is two words wide, the two word positions being even word position 16 and the odd word position 18.

Other sources of inputs to data register 12 are the collector unit of the CPU and the output of A/Q switch 20, a one-of-two select two-words-wide switch, which, depending upon which position is enabled, will transmit the signals representing the two words stored in BINAU A/Q register 22 or the two words stored in central A/Q register 24. Two other sources of signals for storage in data register 12 are the outputs of character alignment switch 26 and word direct alignment switch 28. The signals stored in data register 12 are transmitted, or applied, to word direct alignment switch 28 by data bus 30. Only the signals of the even-numbered word stored in data register 12 are applied to character alignment switch 26, which is a one-of-ten select switch one word wide; word-direct alignment switch 28 is a one-of-four select switch one word wide.

A second set of input signals applied to word-direct alignment switch 28 is the signals stored in effective address register REA 32. The effective address is that of a target word of an instruction and is developed by the address formation logic of the CEPU of the CPU; this effective address is formed and available at the end of the A cycle of the CEPU. The effective address is 18 bits, a half word, and is used by the word-direct alignment switch 28 to form the operand of "direct" operations or instructions.

The outputs from character alignment switch 26, word direct alignment switch 28, each of which are one machine word, and the outputs from A/Q switch 20 and the collector, each of which is two words, are the sources of the input signals to data-in switch 34, a one-of-five select switch two words wide. The output of data-in switch 34, which is two words, is applied to data register switch 12 as its second set of input signals. The two sources of signals to data register switch 14 then are the cache unit and the output of switch 34. The output of data-in switch 34 is also fed over data bus 36 to the instruction fetch unit and central execution unit of the CPU. The signals stored in data register 12, two machine words, are fed over data bus 38 to the four execution units of the central processor; namely, the central execution unit (CEU), the binary and arithmetic unit (BINAU), the decimal and character unit (ECCU), and virtual memory, security and Multics unit (WMSM) Register 12 is also the source of data transmitted over bus 38 to other components of the CEPU such as its paging logic.

As pointed out above, the primary source of input signals, machine words, to data register 12 is the cache unit. Whenever the target word of an instruction is in the cache, or there is a eache hit the target or addressed words are transmitted from the cache unit two words at a time, as a double word. If a single word is all that is required by the execution unit which will be executing the instruction appropriate control signals enable the correct switch positions of switch 14 to apply the signals of only one of the two target words received from the cache unit to data register 12 for storage in either its even position 16 or odd position 18. Normally, when a single word is all that is required, for example for a single precision operation that word is stored in both the even position and the odd position.

If a eache miss occurs, i.e., the target words are not in the cache unit, an input of a double word from the collector unit is applied to data register 12 through data switch 34 and data register switch 14. When a cache miss occurs, the addressed words are obtained from the random access memory of the computer system and are transmitted to the cache unit of the CPU by the collector unit. To minimize interruptions to the operation of the central processor under such circumstances, the addressed words of a block of 8 such words, containing the addressed words being written into the cache unit, are transmitted by the collector to distributor 10 for storage in data register 12 by enabling that switch position of data-in switch 34 that causes the signals from the collector unit to appear as the output of data-in switch 34. The output of switch 34 is also fed to data bus 36 so that it is available to the instruction fetch unit and the central execution unit. Thus, the instruction fetch unit and the central execution unit will be enabled to receive the machine words from data bus 36. This is important in minimizing any delays caused by a cache miss if the target words are instructions needed by the instruction fetch unit, to prevent a break in the pipeline, or in the operation of the CEPU. Similarly, delays caused by a cache miss are minimized if the target words are operands needed by the central execution unit so that it can complete an operation.

Another function of distributor 10 is to maintain current copies of the A/Q registers of the execution units that perform operations on, or use, the A/Q registers in the performance of their operations. BINAU A/Q register 22 stores the latest copy of the contents of the A/Q register of the BINAU execution unit, this information being transmitted to register 22 from the collector unit. The central A/Q register A/Q 24 is updated directly from the CEU one cycle after the contents of either the A or the Q registers of the central execution unit are changed.

Effective address register REA 32 has stored in it signals representing the effective address as developed by the address formation logic of the CEPU. For all direct operations, the effective address is a part of the operand of the instruction, with the effective address occupying either the upper half, the higher order bit positions of a machine word, or the lower half, the lower order bit positions of such a word. To form the required direct operand, one or other of two positions of word-direct alignment switch 28 is enabled by appropriate control signals so that the output word has the effective address from REA 32 in either its upper or lower half. Word-direct alignment switch 28, depending upon which of its positions is enabled by appropriate control signals, will produce as its output the even or odd words stored in register RD 12 or a direct operand. The output from switch 28, when selected by the enabling of the appropriate positions of switches 34 and 14, can be stored in either the even or the odd position of data register RD 12.

Character alignment switch 26 selects, depending upon which of its positions is enabled, one of the four 9-bit characters or one of the six 6-bit characters of a machine word, the even machine word, stored in register 12, and right justifies the selected character in the output word of switch 26. All higher order bit positions of the output of character alignment switch 26 are forced to 0. The output of character alignment switch 26 passes through data-in switch 34 to data register switch 14 for storage in the even word position 16 and the odd word position 18.

The target words of an instruction from the cache unit for an execution unit other than the central execution unit pass through data register switch 14. During their passage through switch 14, these words can be aligned in response to alignment control signals applied to switch 14. From switch 14, the target words are stored into data register 12. The target words stored in data register 12 are then transmitted to the designated execution unit over bus 38 during the E/T cycle of the CEPU. The target words from the collector on a cache miss are also transmitted to the instruction fetch unit and the central execution unit over bus 36. The reason for the direct transmission, under these circumstances, is that the instruction fetch unit and the central execution unit are the most critical units in achieving maximum performance of the CEPU.

Distributor 10 also has the capability of transmitting operands directly to the central execution unit, examples being direct operands and, in the case of a double word operation, of transmitting the even or the odd word to the central execution unit and, in a succeeding clock period, the other of the two target words. The distributor also aligns characters of target words for those instructions which modify or act on a character. In such circumstances, it is necessary to write the correct target word into data register 12 with the word in which the character to be operated on is located being positioned in the even word position of data register 12. This word is then transmitted to character alignment switch 26 and, depending upon which position of switch 26 is enabled, switch 26 selects the desired character whether one of six 6-bit or one of four 9-bit characters which is right justified in the output word of switch 26.

## Claims

1. A distributor for a central processor having a plurality of units, the distributor comprising:
a switch unit (34, 36) for selecting a machine word from one of a plurality of sources,
a register (12) for storing the selected machine word selection means (38) for transmitting the selected machine word from said register to designated ones of said plurality of units, an alignment circuit (26,28) connected to the output of said register, for receiving said selected machine word and for changing the order of portions of said machine word, thereby outputting an aligned word, as a source for said switch unit.

2. A distributor as per claim 1 wherein said sources include a cache and said switch unit comprises first switch means (34) for selecting from said aligned word and one of the remaining sources, other than said cache, and second switch means (14) for selecting from the output of the first switch means and the cache.

3. A distributor as claim 1 wherein said alignment circuit comprises a character alignment switch (26) for selecting one of the plurality of characters in a machine word.

4. A distributor as claimed in claim 1 wherein the effective address from an effective address register (32) is applied to the alignment circuit and the alignment circuit produces as an output machine word a direct operand.

5. A distributor according to claim 1 wherein the sources include a plurality of A/Q registers (22,24) associated with different execution units, the distributor further including an A/Q register switch unit (20) for selecting the content of one of the A/Q register as a source for the switch unit (34,36).

## Patentansprüche

1. Verteiler für einen Zentralprozessor mit einer Vielzahl von Einheiten, wobei der Verteiler aufweist:
eine Schalteinheit (34, 36) zum Auswählen eines Maschinenwortes aus einer von einer Vielzahl von Quellen,

ein Register (12) zum Speichern des ausgewählten Maschinenwortes,
eine Auswahleinrichtung (38) zum Übertragen des ausgewählten Maschinenwortes aus dem Register in bezeichnete Einheiten aus der Vielzahl von Einheiten,
eine Ausrichtungs-Schaltung (26, 28), die mit dem Ausgang des Registers verbunden ist, zum Aufnehmen des ausgewählten Maschinenwortes und zum Ändern der Ordnung der Teile des Maschinenwortes, wodurch ein ausgerichtetes Wort ausgegeben wird, und zwar als eine Quelle für die Schalteinheit.

2. Verteiler nach Anspruch 1, wobei die Quellen einen CacheSpeicher aufweisen und die Schalteinheit eine erste Schalteinrichtung (34) aufweist zum Auswählen aus dem ausgerichteten Wort und einer der verbleibenden Quellen, die von dem Cache-Speicher verschieden sind, und eine zweite Schalteinrichtung (14) zum Auswählen aus dem Ausgang der ersten Schalteinrichtung und dem Cache-Speicher.

3. Verteiler nach Anspruch 1, wobei die Ausrichtungs-Schaltung einen Zeichenausrichtungs-Schalter (26) aufweist, zum Auswählen eines aus einer Vielzahl von Zeichen in einem Maschinenwort.

4. Verteiler nach Anspruch 1, wobei die effektive Adresse aus einem effektiven Adressenregister (32) zu der Ausrichtungs-Schaltung geführt ist und die Ausrichtungs-Schaltung einen direkten Operanden als Ausgangs-Maschinenwort erzeugt.

5. Verteiler nach Anspruch 1, wobei die Quellen eine Vielzahl von A/Q Registern (22, 24) aufweisen, die mit verschiedenen Ausführungseinheiten verbunden sind, wobei der Verteiler ferner eine A/Q-Register-Schalteinheit (20) aufweist, zum Auswählen des Inhaltes eines der A/Q Register als Quelle für die Schalteinheit (34, 36).

## Revendications

1. Distributeur pour processeur central ayant une pluralité d'unités, ce distributeur comprenant:
une unité de commutation (34, 36) pour sélectionner un mot machine de l'une des sources de la pluralité de sources,
un registre (12) pour enregistrer le mot machine sélectionné,
des moyens de sélection (38) pour transmettre le mot machine sélectionné dudit registre à des unités désignées de ladite pluralité d'unités,
un circuit d'alignement (26, 28) relié à la sortie dudit registre, pour recevoir ledit mot machine sélectionné et pour changer l'ordre de portion dudit mot machine, ce circuit fournissant en sortie un mot aligné, comme source pour ladite unité de commutation.

2. Distributeur selon la revendication 1 dans lequel lesdites sources comportent un cache et ladite unité de commutation comprend des premiers moyens de commutation sélectionnant à partir dudit mot aligné et de l'une des sources restantes, autres que ledit cache, et des seconds moyens de commutation (14) sélectionnant à partir de la sorties des premiers moyens de commutation et dudit cache.

3. Distributeur selon la revendication 1 dans lequel ledit circuit d'alignement comprend un commutateur (26) de caractère d'alignement sélectionnant l'un des caractères d'une pluralité de caractères dans le mot machine.

4. Distributeur selon la revendication 1 dans lequel l'adresse effective fournie par un registre (32) d'adresse effective est appliquée au circuit d'alignement et dans lequel le circuit d'alignement fournit en sortie un opérande direct comme mot machine.

5. Distributeur selon la revendication 1 dans lequel les sources comprennent une pluralité de registres A/Q (22, 24) associés à différentes unités d'exécution, le distributeur comprenant en outre une unité de commutation (20) de registre A/Q pour sélectionner le contenu de l'un des registres A-Q comme source pour l'unité de commutation (34, 36).

COLLECTOR

CENTRAL-EU

EFFECTIVE ADDRESS

BINAU A/Q   22

CENTRAL A/Q   24

REA   32

10

28

WORD ALIGN
DIRECT ALIGN

26   CHARACTER
ALIGN

20

34

30

36   IFETCH

CACHE

CEU

14

16   RD   18   12

38

CEU

PAGING

BINAU

DECCU

VMSM

EP 0 107 447 B1

1